# EUROPÄISCHE PATENTSCHRIFT

(11) **EP 2 177 749 B1**
(45) Veröffentlichungstag und Bekanntmachung des Hinweises auf die Patenterteilung: **04.12.2013**
(21) Anmeldenummer: 09012134.4
(22) Anmeldetag: 24.09.2009
(51) Int. Cl.: F03B 3/12, F03B 13/26, F03B 17/06

(54) **Unterwasserkraftwerk mit passiver Leistungsregelung**
Underwater power station with passive power control.
Centrale électrique sous-marine à réglage de puissance passif

(30) Priorität: 15.10.2008 DE 102008051370
(43) Veröffentlichungstag der Anmeldung: 21.04.2010
(73) Patentinhaber: Voith Patent GmbH, 89522 Heidenheim (DE)
(72) Erfinder: Arlitt, Raphael, Dr., 89077 Ulm (DE); Starzmann, Ralf, 89555 Söhnstetten (DE); Biskup, Frank, 73527 Schwäbisch Gmünd (DE)
(74) Vertreter: Schmidt, Sven Hendrik

(56) Entgegenhaltungen:
- DE-A1- 2 739 297
- US-A- 1 962 382
- US-A- 6 116 856

## Beschreibung

Die Erfindung betrifft ein Unterwasserkraftwerk mit passiver Leistungsregelung, insbesondere ein Gezeitenströmungskraftwerk, das eine propellerförmige Wasserturbine in Horizontalläuferbauweise aufweist.

Unterwasserkraftwerke, die ohne Dammstruktur freistehend aus einer Gewässerströmung kinetische Energie aufnehmen, sind insbesondere zur Energiegewinnung aus einer Ozeanströmung, vorzugsweise einer Gezeitenströmung, geeignet. Eine vorteilhafte Ausgestaltung für Unterwasserkraftwerke umfasst propellerförmige Wasserturbinen mit einer Vielzahl von Rotorblättern, die an einer umlaufenden Einheit befestigt sind.

Eine solche Wasserturbine kann über eine Maschinengondel, in der typischerweise ein elektrischer Generator aufgenommen ist, an einer Tragstruktur befestigt sein, die als auf dem Gewässergrund fundamentiert oder schwimmfähig ausgebildet wird. Zur wirtschaftlichen Auslegung gattungsgemäßer Unterwasserkraftwerke, insbesondere für die Gewinnung von Energie aus einer Gezeitenströmung, werden typischerweise die mittleren im Jahresverlauf auftretenden Strömungsgeschwindigkeiten zugrundegelegt. Allerdings können bei einem Anlagenstandort im Meer in bestimmten Fällen wenigstens kurzzeitig Anströmungsgeschwindigkeiten vorliegen, die oberhalb der gewählten Anlagenauslegung liegen. Derartige Extremsituationen treten insbesondere unter stürmischen Bedingungen auf, für die die Wind und Wellen in Richtung der Gezeitenströmung verlaufen. Für derartige Belastungsfälle ist die von der Wasserturbine aus der Strömung aufgenommene mechanische Leistung zu begrenzen.

Eine bekannte Form der Leistungsbegrenzung sieht die Verwendung einer aktiven Blattwinkelverstelleinrichtung vor. Diese ermöglicht, den Anstellwinkel der Rotorblätter gegenüber der antreibenden Strömung so zu wählen, dass eine gewünschte Leistungskennlinie vorliegt. In Extremsituationen werden die Rotorblätter in Richtung der Fahnenstellung geführt und als Folge der Leistungseintrag begrenzt. Entsprechend sind die der Wasserturbine nachfolgenden Komponenten im Antriebsstrang gegen Überlastung geschützt. Nachteilig an diesem Lösungsansatz ist der konstruktive Aufwand zur Ausgestaltung einer solchen Blattwinkelverstelleinrichtung. Darüber hinaus sind zusätzliche bewegliche Komponenten in der umlaufenden Einheit notwendig, die zu einem erhöhten Ausfallrisiko führen und als Folge einer regelmäßigen Wartung bedürfen.

Beispiele von Anlagen aus dem Stand der Technik sind in DE 2739297 A1 und US 1962382 A zu finden.

Um zu einer robusten und möglichst wartungsarmen Anlagengestaltung zu gelangen, kann als alternative Maßnahme zur Leistungsbegrenzung eine Drehzahlführung mittels der Stützwirkung durch den elektrischen Generator im Antriebsstrang bewirkt werden. Durch den Generator und eventuell durch weitere Bremsvorrichtungen ist es möglich, im Überlastfall den Rotor zu verlangsamen, um ihn vom Leistungsoptimum wegzuführen. Diese Verlangsamung kann so weit gehen, dass ein Strömungsabriss am Profil der Rotorblätter eintritt, so dass der Leistungseintrag effizient verringert wird. Nachteilig an diesem Lösungsansatz ist jedoch, dass die unter der Bedingung eines Strömungsabrisses auftretenden mechanischen Belastungen aufgrund der auftretenden Blattanregungen hoch sind und eine entsprechende Auslegung der Struktursteifigkeit der Rotorblätter voraussetzen. Aus dieser Anforderung an die Festigkeit resultiert ein hoher konstruktiver Aufwand und zusätzliches Gewicht für die Wasserturbine.

Wird die voranstehend genannte Geschwindigkeitsführung der Wasserturbine zur Leistungsbegrenzung derart ausgeführt, dass im Überlastfall eine Drehzahlzunahme auf eine Umlaufgeschwindigkeit oberhalb des Bestpunkts ermöglicht wird, kann zwar ein Strömungsabriss sicher verhindert werden, allerdings werden auch im Bereich hoher Umlaufgeschwindigkeiten große Kräfte auf die Wasserturbine wirken, wobei insbesondere im Schnelllaufbereich die zunehmenden Zentrifugalmomente für die Anlagenauslegung zu beachten sind.

Der Erfindung liegt die Aufgabe zugrunde, eine Leistungsbegrenzung im Überlastfall anzugeben, die konstruktiv einfach ist und für die auf eine zugeordnete Steuerungs- und Regelungseinrichtung verzichtet werden kann. Darüber hinaus soll die Leistungsbegrenzung so ausgeführt sein, dass die Einwirkung übermäßig hoher Lasten auf den Rotor konstruktionsbedingt ausgeschlossen werden kann.

Zur Lösung der voranstehend genannten Aufgabe haben die Erfinder erkannt, dass mittels einer Selbstverstellung der Rotorblätter für eine Wasserturbine in Horizontalläuferbauweise eine robuste und effiziente Leistungsbegrenzung gegeben ist. Hierzu wird von einer propellerförmig gestalteten Wasserturbine mit einer Vielzahl an einer umlaufenden Einheit befestigten Rotorblättern ausgegangen. Jedem der Rotorblätter ist eine Schwenkachse zugeordnet, die sich im Wesentlichen längs der Rotorblätter erstreckt. Dabei liegt die Schwenkachse gegenüber dem hydrodynamischen Zentrum zur angeströmten Profilnase hin verschoben.

Um die Schwenkachse kann sich das jeweilige Rotorblatt entweder am Fußpunkt, das heißt der Befestigung an der umlaufenden Einheit, drehen und/oder das Rotorblatt führt aufgrund der durch hydrodynamische Kräfte bewirkten Belastung eine Torsion um die Schwenkachse aus. Dabei kann die Torsion über das ganze Blatt verlaufen oder auf einen Teil der Längserstreckung, das heißt über einen Abschnitt der Schwenkachse, beschränkt sein.

Die Ausgestaltungsalternativen einer drehbar ausgeführten Befestigung zum einen und einer gegenüber einer Torsion elastischen Ausbildung des Rotorblatts zum anderen führen bei einer entsprechenden Wahl der Schwenkachse relativ zur Auffädellinie der hydrodynamischen Zentren der Profilschnitte mit der Schwenkachse als Flächennormale zu einem aufschwenkenden Moment. Hierunter wird ein Moment verstanden, dass das Rotorblatt in Richtung der Fahnenstellung verdreht beziehungsweise eine in diese Richtung weisende Torsion bewirkt.

Der Bewegung zur Fahnenstellung entgegen wirken die beim Umlauf des Rotorblatts auftretenden Fliehkräfte, so dass zu jeder Betriebssituation ein Momentengleichgewicht zwischen den Zentrifugalmomenten, die ein das Blatt zurückführendes Moment erzeugen, sowie den aufschwenkenden, hydrodynamischen Momenten besteht. Im Fall einer elastischen Verformung der Rotorblätter oder daran angeschlossener Komponenten sind zusätzlich elastische Rückstellkräfte zu beachten. Diese können bei einer Torsion im Blatt selbst entstehen oder es wird zusätzlich in die Befestigung des Rotorblatts an der umlaufenden Einheit eine Einrichtung zur Erzeugung einer Rückstellkraft aufgenommen.

Für den Fall, dass eine Einrichtung zur Erzeugung einer Rückstellkraft in die Befestigung des Rotorblatts in der umlaufenden Einheit integriert ist, die gegen eine Drehung des Rotorblatts um die Schwenkachse in Richtung der Fahnenstellung elastisch entgegenwirkt, werden die Rotorblätter nach dem Abklingen des Überlastfalls automatisch in die Rotorebene zurückgeführt. Entsprechendes gilt, wenn die aufschwenkende Bewegung in Richtung der Fahnenstellung weitgehend auf einer Torsion der Rotorblätter beruht.

Fehlen derart elastische Rückstellkräfte für eine Ausgestaltung mit drehbar an der umlaufenden Einheit befestigten Rotorblättern, so muss das Zurückholen aus der Fahnenstellung durch die Wirkung der Zentrifugalmomente bewirkt werden. Hierzu wird die Wasserturbine entweder mittels eines motorischen Betriebs des elektrischen Generators des Unterwasserkraftwerks soweit beschleunigt bis ein Zurückschwenken erfolgt oder es liegt auch in der Fahnenstellung ein minimales antreibendes Moment bei einer für den Anlagenbetrieb hinreichenden Anströmung vor, so dass ein selbständiges Hochlaufen bis zur einer Drehzahlschwelle erfolgt, für die die Zentrifugalmomente die hydrodynamischen Momente mit aufschwenkender Wirkung übersteigen und ein Rückführen in die Stellung für den Normalbetrieb eintritt.

Gemäß der Erfindung wird die erfindungsgemäße passive Leistungsregelung für ein bidirektional anströmbares Unterwasserkraftwerk verwendet. Insbesondere für Gezeitenkraftwerke sind bidirektional anströmbare Profile für die Rotorblätter von Vorteil, da bei einer solchen Konstruktion ein zyklischer Wechsel der Anströmungsrichtung keine Drehung der Rotorblätter um deren Längsachse beziehungsweise eine Drehung der gesamten Anlage um die Hochachse notwendig macht. Hierzu können hydrodynamisch symmetrisch gestaltete Profile mit linsenförmiger Gestalt oder punktsymmetrische Profile mit einem S-Schlag verwendet werden. Wird die passive Rotorblattverstellung mit einer beidseitigen Anströmbarkeit kombiniert, resultiert ein Anlagendesign, das insbesondere im Hinblick auf die Steuerung und Regelung konstruktiv wesentlich vereinfacht ist. Entsprechend verringert ist die Anforderung an die für die Überwachung der Anlage notwendige Steuerungselektronik, so dass ein Unterwasserkraftwerk mit hoher Robustheit resultiert. Nachfolgend wird die Erfindung anhand von Ausführungsbeispielen in Verbindung mit Figurendarstellungen genauer erläutert. In diesen ist im Einzelnen Folgendes dargestellt:
- Figur 1: zeigt eine nicht erfindungsgemäße Rotorblattverstelleinrichtung.
- Figur 2: erläutert die Anströmungsverhältnisse und die hieraus resultierende Kraftwirkung für ein unidirektionales Rotorblattprofil.
- Figur 3: verdeutlicht das Aufschwenken eines Rotorblatts in Richtung der Fahnenstellung.
- Figur 4: zeigt die elastische Torsion eines Rotorblatts in Richtung der Fahnenstellung.
- Figur 5: zeigt eine Weitergestaltung der Ausführung gemäß Figur 1 mit Zusatzgewichten und einer eine Rückstellkraft erzeugenden Einrichtung.
- Figur 6: zeigt die Ausführung nach Figur 5 in Querschnittansicht.
- Figuren 7, 8: zeigen für ein bidirektionales Profil die hydrodynamischen Kräfte für eine Anströmung aus unterschiedlichen Richtungen.
- Figur 9: zeigt eine Querschnittsansicht der Führungsnuten einer erfindungsgemäßen Rotorblattverstelleinrichtung für ein bidirektionales Rotorblattprofil.
- Figur 10: zeigt den Schnitt B-B aus Figur 9.
- Figur 11: zeigt für den Schnitt aus Figur 9 mit einem überlagerten Rotorblattprofil den Normalbetriebszustand für eine Anströmung aus einer ersten Richtung.
- Figur 12: zeigt für den Schnitt aus Figur 9 mit einem überlagerten Rotorblattprofil den Überlastfall mit einem in die Fahnenstellung aufgeschwenkten Rotorblatt.
- Figuren 13, 14: zeigen für den Schnitt aus Figur 9 mit einem überlagerten Rotorblattprofileinen Wechsel der Schwenkachse als Folge einer Umkehr der Anströmungsrichtung.

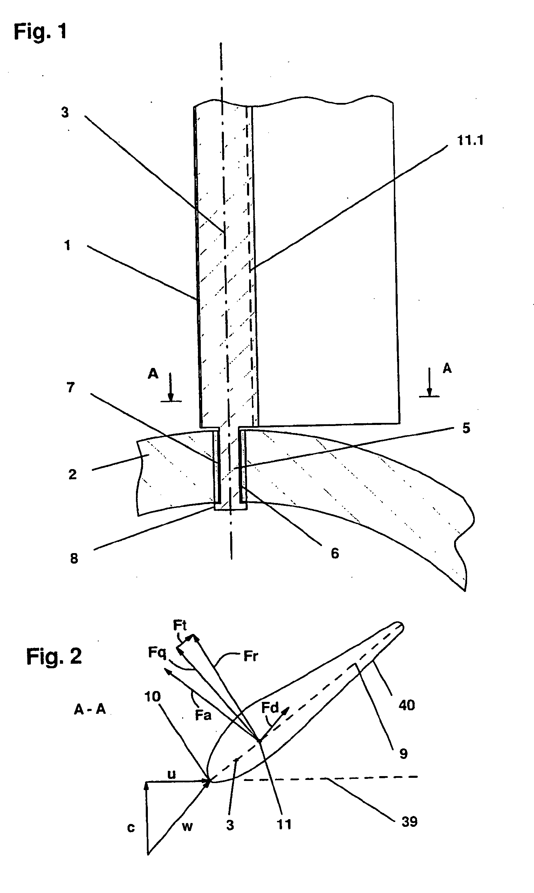

Figur 1 zeigt einen Längsschnitt eines Teilabschnitts eines Rotorblatts 1 mit einer passiven Rotorblattverstellung. Dabei ist das Rotorblatt 1 an einer umlaufenden Einheit 2, die vorliegend nabenförmig gestaltet ist, um eine Schwenkachse 3 drehbar angelenkt. Hierzu ist ein Achsstutzen 5 vorgesehen, der in eine Aufnahme 6 in der umlaufenden Einheit 2 eingeführt ist. Der Aufnahme 6 ist eine Lagerung 7 zugeordnet, die beispielsweise als wassergeschmiertes Gleitlager ausgeführt sein kann und die dem Achsstutzen 5 eine Drehbewegung ermöglicht. Dabei muss die Lagerung 7 die vom Rotorblatt in die umlaufende Einheit 2 eingeleiteten Kräfte aufnehmen. Zusätzlich ist eine Radialsicherung 8 am Achsstutzen 5 vorgesehen, die ein Widerlager an der umlaufenden Einheit 2 hintergreift, um das Rotorblatt 1 in radialer Richtung zu sichern.

Durch die in Figur 1 dargestellte, drehbare Anlenkung des Rotorblatts 1 an der umlaufenden Einheit 2 wird sich beim Anlagenbetrieb der Blattwinkel des Rotorblatts 1 relativ zur Rotationsebene 39 gemäß dem Gleichgewicht der angreifenden Momente einstellen. Eines der wirkenden Momente entsteht durch die am Rotorblatt 1 angreifenden hydrodynamischen Kräfte. Dies ist in Figur 2 dargestellt, wobei ein unidirektionales Profil eines Rotorblatts 1 gemäß des Schnitts A-A aus Figur 1 skizziert ist. Das gezeigte Profil ist schematisch vereinfacht, wobei im Allgemeinen für gattungsgemäße Unterwasserkraftwerke Profile ähnlich jenen von Tragflügeln verwendet werden.

In Figur 2 sind die antreibende Strömung c und die negative Umfangsgeschwindigkeit u des Rotorblatts skizziert, die sich vektoriell zur effektiven Anströmung w summieren. Diese trifft auf die Profilnase 10 und erzeugt auf das Profil eine Kraftwirkung, die am hydrodynamischen Zentrum 11 angreift. Diese setzt sich aus der Auftriebskraft Fₐ und dem Strömungswiderstand F_{d} zusammen, die vektoriell addiert die resultierende hydrodynamische Kraft Fᵣ ergeben. Vorliegend liegt das hydrodynamische Zentrum 11 bei etwa einem Viertel der Länge der Profilsehne 9. Dabei kann die am hydrodynamischen Zentrum 11 angreifende resultierende hydrodynamische Kraft Fᵣ in zwei Komponenten aufgeteilt werden. Zum einen ist dies die Tangentialkraft Fₜ, die parallel zur Profilsehne 9 verläuft. Zum anderen ergibt sich eine Querkraft F_{q} mit einer Orientierung senkrecht zur Profilsehne 9.

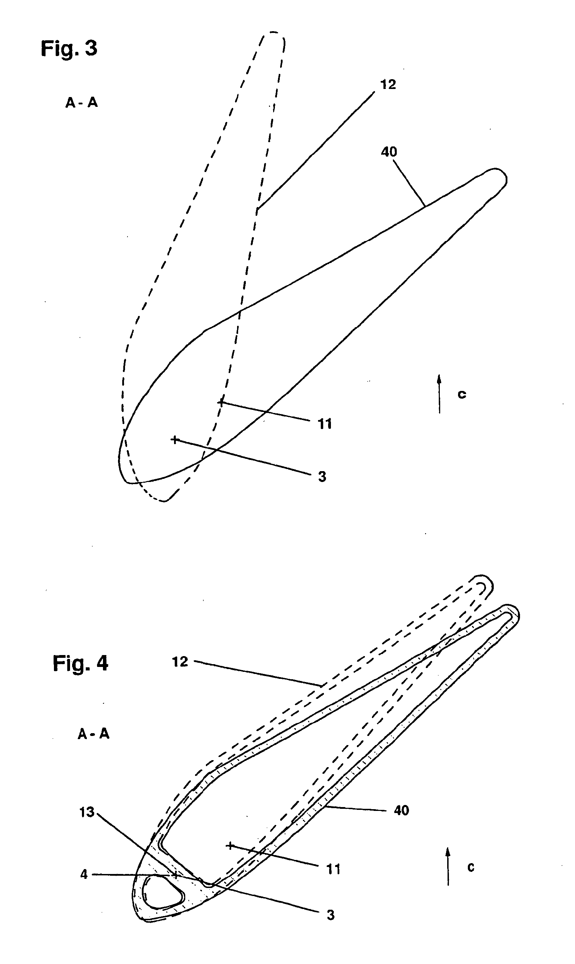

Die Schwenkachse 3 wird so gewählt, dass die hydrodynamischen Kräfte ein Moment erzeugen, das in Richtung der Fahnenstellung gerichtet ist. Hierzu wird die Schwenkachse 3 beabstandet vom hydrodynamischen Zentrum stromaufwärts verlagert angeordnet. Aufgrund des hieraus resultierenden Hebels erzeugt die Querkraft F_{q} ein Moment, das für die vorliegende Darstellung gegen die Uhrzeigerrichtung gerichtet ist. Dieses Moment wirkt aufschwenkend und versucht das Profil in Fahnenstellung zu drehen, das heißt der Winkel zwischen der Profilsehne 9 und der Rotationsebene 39 wird vergrößert, um den Anstellwinkel des Profils 40 gegenüber der effektiven Anströmung w zu verringern. Ein Profil 40 in Ausgangsstellung sowie gestrichelt dargestellt für die aufgeschwenkte Stellung 12 in Richtung der Fahnenstellung ist für eine vorgegebene antreibende Strömung c in Figur 3 skizziert.

Für eine alternative Ausgestaltung ist das Rotorblatt 1 nicht drehbar an der umlaufenden Einheit 2 angelenkt. Stattdessen wird das Aufschwenken durch ein elastisches Verhalten des Rotorblatts 1 bewirkt. Dies wird in Figur 4 dargestellt. Dabei ist die Lage einer Aussteifung 4 für ein als Hohlprofil ausgebildetes Rotorblatt 1 so gewählt, dass der Bereich erhöhter Strukturfestigkeit stromaufwärts zum hydrodynamischen Zentrum 11 liegt. Durch diese Maßnahme führt die Querkraft F_{q} zu einer Verdrillung um eine Torsionsachse 13, die nachfolgend entsprechend zur voranstehend gewählten Terminologie als Schwenkachse 3 bezeichnet wird, wobei diese Achse für das dargestellte Ausführungsbeispiel entlang der Aussteifung 4 verläuft. Dabei resultiert, wie in Figur 4 angedeutet, für das dem Schnitt A - A zugeordnete Profil 40 eine begrenzte Verdrillung des Rotorblatts 1 um die Schwenkachse 3, so dass das Profil 40 erst ab einem bestimmten radialen Abstand von der umlaufenden Einheit 2 in den Bereich der Fahnenstellung geführt ist. Durch die Anpassung der Aussteifung 4 und eine hieraus resultierende örtliche Festlegung der elastischen Gegenkräfte gegenüber einer Torsion besteht die Möglichkeit, die Aufschwenkcharakteristik und das hierfür notwendige Moment einzustellen.

Ferner können die beiden voranstehend beschriebenen Maßnahmen einer Drehung um die Schwenkachse 3 durch eine drehbare Anlenkung des Rotorblatts 1 an der umlaufenden Einheit 2 und einer Torsion um eine zum hydrodynamischen Zentrum 11 stromaufwärts angeordneten Schwenkachse 3 miteinander kombiniert werden.

Entgegen der vorausgehend beschriebenen, aufschwenkenden Momente aufgrund der hydrodynamischen Kraftwirkung auf das Profil 40 der Rotorblätter 1 wirken die beim Umlauf entstehenden Fliehkräfte am Rotorblatt 1. Diese haben das Bestreben, das Rotorblatt 1 in die Rotationsebene 39 zurückzuführen, so dass sich für eine vorgegebene Anströmungsgeschwindigkeit am Rotorblatt 1 ein Momentengleichgewicht einstellen wird. Dabei kann durch die Profilgestaltung und die Lagefestlegung der Schwenkachse 3 in Verbindung mit der durch den direkt angekoppelten elektrischen Generator bewirkten Geschwindigkeitsführung, eine solche Auslegung gewählt werden, dass erst im Fall einer extremen Belastung die Gleichgewichtsstellung im Bereich der Fahnenstellung liegt und für den Normalbetrieb das Rotorblatt 1 einen für den Vortrieb günstigen Winkel gegenüber der effektiven Anströmung w einnimmt.

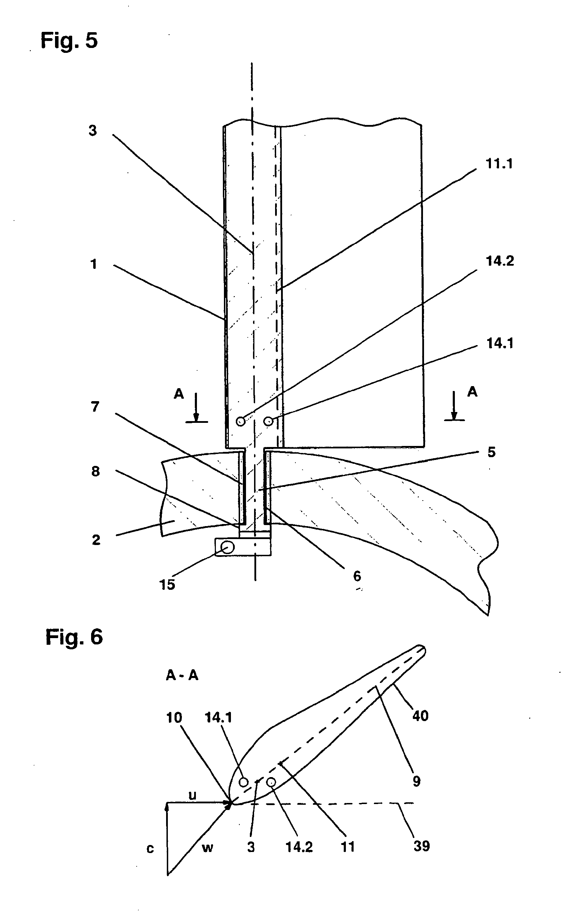

Dabei lässt sich durch zusätzliche Maßnahmen die resultierende Gleichgewichtsstellung beeinflussen. Hierzu sind in der in Figur 5 gezeigten Weitergestaltung der Ausführungsform gemäß Figur 1 paarweise angeordnete Zusatzgewichte 14.1, 14.2 vorgesehen. Dabei ist aus der Querschnittansicht von Figur 6 ersichtlich, dass die Zusatzgewichte 14.1, 14.2 parallel zur Rotationsebene 39 von der Schwenkachse 3 beabstandet sind. Hierdurch erhöht sich das Flächenzentrifugalmoment des Rotorblatts 1, so dass beim Umlauf die rückstellenden Momente, die das Rotorblatt 1 zur Angriffsstellung entgegen der Fahnenstellung führen, vergrößert sind. Zusätzlich oder alternativ kann eine Einrichtung zur Erzeugung einer Rückstellkraft 15 vorgesehen sein. In Figur 5 ist hierzu eine in die umlaufende Einheit 2 integrierte Vorrichtung skizziert, die auf eine Verlängerung am Achsstutzen 5 wirkt. Dabei werden insbesondere passive Systeme bevorzugt, die bei einer Drehbewegung des Rotorblatts 1 in Richtung der Fahnenstellung eine Gegenkraft erzeugen. Hierzu sind Federanordnungen geeignet.

Des Weiteren verbessern die in den Figuren 5 und 6 gezeigten Maßnahmen die Inbetriebnahme eines erfindungsgemäßen Unterwasserkraftwerks mit passiver Rotorblattverstellung. Dabei wird davon ausgegangen, dass sich die Rotorblätter 1 in Fahnenstellung befinden und bezüglich der Anströmung kein Überlastungsfall gegeben ist. Für den Fall, dass keine Einrichtung zur Erzeugung einer Rückstellkraft 15 vorgesehen ist, ist es nötig, die Wasserturbine zunächst auf eine bestimmte Umlaufgeschwindigkeit zu bringen. Dies gelingt durch einen motorischen Betrieb des elektrischen Generators. Ab einer bestimmten Umlaufgeschwindigkeit führen die Fliehkräfte das Rotorblatt 1 zur Rotationsebene 39, so dass für den Normalbetrieb die von den einzelnen Rotorblättern 1 erzeugte Vortriebskraft beim generatorischen Betrieb des elektrischen Generators die Wasserturbine mit einer solchen Drehzahl umläuft, dass die Fliehkräfte entgegen der aufschwenkenden hydrodynamischen Momente die Rotorblätter bis zu einer vorbestimmten Geschwindigkeit der antreibenden Strömung c in Angriffsstellung halten.

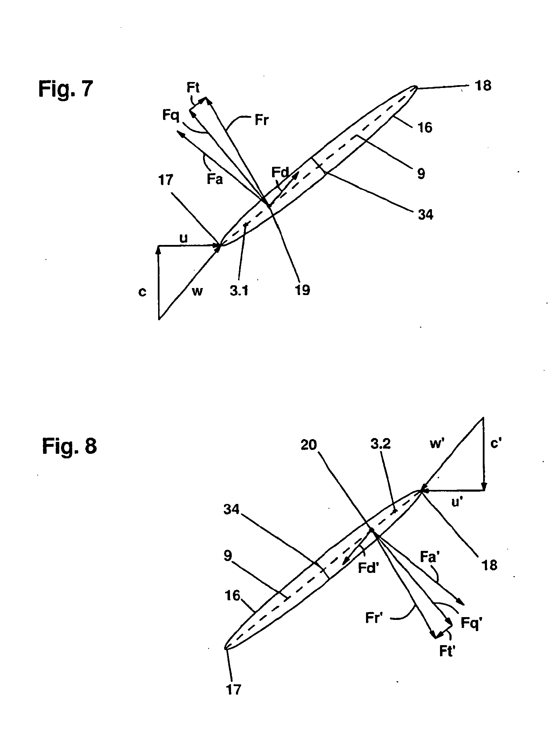

Die Figuren 7 bis 14 behandeln die Ausgestaltung der passiven Rotorblattverstellung für ein erfindungsgemäßes Unterwasserkraftwerk mit einem bidirektional anströmbaren Profil 16. Ein solches ist schematisch vereinfacht in den Figuren 7 und 8 gezeigt, wobei ein linsenförmiges Profil angenommen wird, das gegenüber der Profilsehne 9 und der Mittenlinie 34 symmetrisch angelegt ist. Alternativ kann das Profil einen S-Schlag ausführen. Für diesen Fall ist die Skelettlinie punktsymmetrisch und folgt einer S-förmigen Kontur. Eine solche Profilgestaltung ist im Einzelnen nicht in den Figuren dargestellt.

Ferner zeigt Figur 7 für einen exemplarischen Profilschnitt die antreibende Strömung c aus einer ersten Richtung, die negative Umlaufgeschwindigkeit u sowie die effektive Anströmung w, wobei die am ersten hydrodynamischen Zentrum 19 angreifende resultierende hydrodynamische Kraft Fᵣ erzeugt wird. Für eine zweite, entgegengesetzte Anströmungsrichtung mit der antreibenden Strömung c', die in Figur 8 dargestellt ist, entsteht die resultierende hydrodynamische Kraft Fᵣ', die am symmetrisch gelegenen, zweiten hydrodynamischen Zentrum 20 angreift. Zur Realisierung einer passiven Rotorblattverstellung ist die Schwenkachse jeweils stromaufwärts des hydrodynamischen Zentrums anzuordnen, um gegenüber der Querkraft F_{q}, F_{q}' einen Hebelarm zur Erzeugung eines aufschwenkenden Moments bereitzustellen. Demnach besteht die Notwendigkeit, je nach Anströmungsrichtung einen Wechsel von einer ersten Schwenkachse 3.1 auf eine zweite Schwenkachse 3.2 auszuführen. Hierzu können aktive Systeme verwendet werden, dabei würde jedoch ein unerwünschter steuerungstechnischer Aufwand entstehen. Daher wird bevorzugt, den Übergang von der ersten Schwenkachse 3.1 zur zweiten Schwenkachse 3.2 in Abhängigkeit der Anströmungsrichtung ebenfalls passiv auszuführen, so dass der Wechsel ausschließlich durch die Strömungskräfte selbst bewirkt wird.

Für die in den Figuren 7 und 8 gewählte Zerlegung der resultierenden hydrodynamischen Kraft Fᵣ, Fᵣ' in eine zur Profilsehne 9 senkrechte Querkraft F_{q}, F_{q}' und eine zur Profilsehne 9 parallele Tangentialkraft Fₜ, Fₜ' ergibt sich für das dargestellte Ausführungsbeispiel eine Tangentialkraft Fₜ, Fₜ', die von der jeweils angeströmten Profilnase zur abstromseitigen Profilnase weist. Diese Richtung lässt sich durch die Wahl des Profils und dessen Einbauwinkel für einen vorgegeben Anströmungsgeschwindigkeitsbereich durch eine Festlegung des Verhältnisses zwischen der Auftriebskraft und dem Strömungswiderstand am Profil einstellen. Das nachfolgende Ausführungsbeispiel einer passiven Rotorblattverstellung für ein bidirektional anströmbares Profil 16 geht von einer solchermaßen gewählten Richtung für die Tangentialkraft Fₜ, Fₜ' aus. Allerdings lässt sich das dargelegte Prinzip auch für eine entgegengesetzt gerichtete Tangentialkraft Fₜ, Fₜ' anwenden.

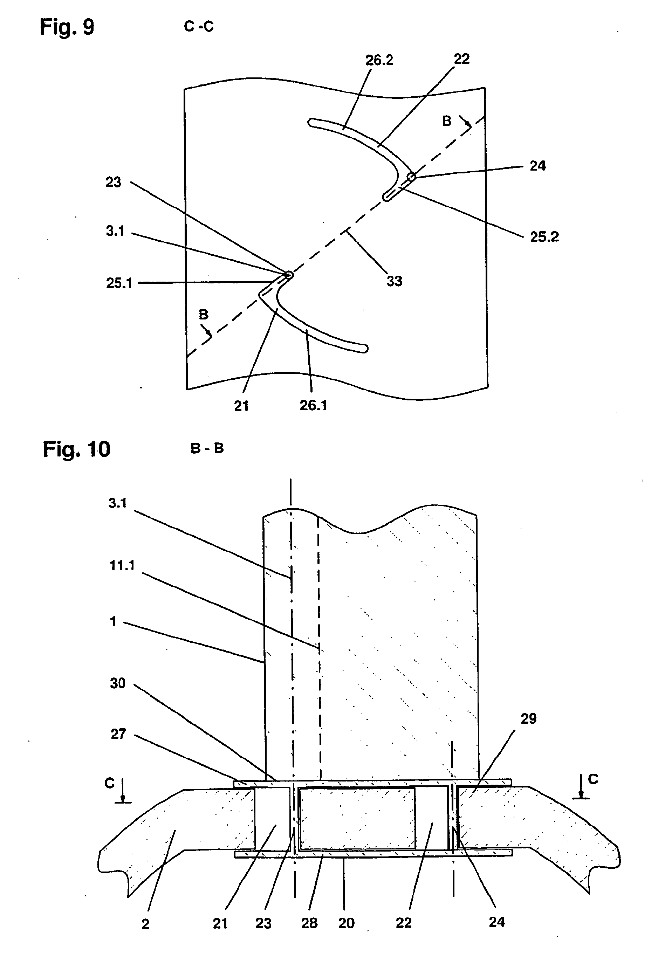

Figuren 9 und 10 zeigen eine mögliche Ausgestaltung einer passiven Rotorblattverstellung für ein Rotorblatt 1 mit einem bidirektionalen Profil. Hierzu ist in der umlaufenden Einheit 2 ein ebener Führungsbereich 29 vorgesehen, an dem eine mit dem Rotorblatt 1 starr verbundene Gleitvorrichtung 30 eine geführte Gleitbewegung ausführt und zugleich die Rotorblattkräfte überträgt. Für die vorliegende Gestaltung weist die Gleitvorrichtung 30 eine obere Abstützplatte 27 und eine untere Abstützplatte 28 auf, die planparallel angelegt sind und bezüglich ihres Abstands so gewählt sind, dass bei einer Relativbewegung zum ebenen Führungsbereich 29 ein Abgleiten auf der Ober- und Unterseite desselben erfolgt. Vorteilhafterweise sind die wirkenden Ablaufflächen dieser Komponenten mit einem Gleitwerkstoff, beispielsweise PTFE, belegt oder als Gleitlager angelegt, wobei für diesen Fall eine Komponente bevorzugt aus einem harten Werkstoff, typischerweise Edelstahl, besteht und die Gegenlauffläche aus einem weichen Werkstoff, beispielsweise einem Elastomer insbesondere Orkot®, ausgebildet wird.

Die Verbindung zwischen der oberen Abstützplatte 27 und der unteren Abstützplatte 28 erfolgt durch ein erstes Kopplungselement 23 und ein zweites Kopplungselement 24 mit bevorzugt zylindrischer Form. Die Kopplungselemente 23, 24 sind bezüglich des bidirektionalen Profils des Rotorblatts 1 so angeordnet, dass deren Längsachsen die erste und zweite Schwenkachse 3.1, 3.2 definieren. Dabei bewegt sich das erste Kopplungselement 23 in einer ersten Führungsnut 21, die durch den ebenen Führungsbereich 29 hindurchreicht. Entsprechend ist dem zweiten Kopplungselement 24 eine zweite Führungsnut 22 zugeordnet.

Die Wirksamkeit jeweils einer der beiden Schwenkachsen 3.1, 3.2 wird durch die Bewegungsmöglichkeit der Kopplungselemente 23, 24 in den zugeordneten Führungsnuten 21, 22 bestimmt. Dies ist aus der in Figur 9 gezeigten Schnittansicht C-C ersichtlich. Die beiden Führungsnuten 21, 22 sind zueinander spiegelbildlich ausgebildet und weisen jeweils einen kurzen Schenkel auf, der wenigstens in den Endbereichen parallel zur Profilsehne 9 des Rotorblatts 1 in Normalbetriebsstellung verläuft. Die kurzen Schenkel werden nachfolgend als tangentiale Führungen 25.1, 25.2 bezeichnet. Diesen kann eine übereinstimmende Längsachse der tangentialen Führungen 33 zugeordnet werden. Ferner sind für die beiden Führungsnuten 21, 22 jeweils Aufschwenkbereiche 26.1 und 26.2 vorgesehen, die sich an die tangentiale Führungen 25.1, 25.2 anschließen. Bevorzugt folgt die Gleitfläche eines Aufschwenkbereichs 26.1, 26.2 für das jeweils zugeordnete Kopplungselement 23, 24 im Wesentlichen einem Kreisbogen, dessen Mittelpunkt im Endbereich der tangentiale Führung 25.1, 25.2 der gegenüberliegenden Führungsnut 21, 22 für das nicht zugeordnete Kopplungselement 23, 24 liegt. Der Radius des Kreisbogens entspricht im Wesentlichen dem Mittelpunktsabstand der beiden Kopplungselemente 23, 24.

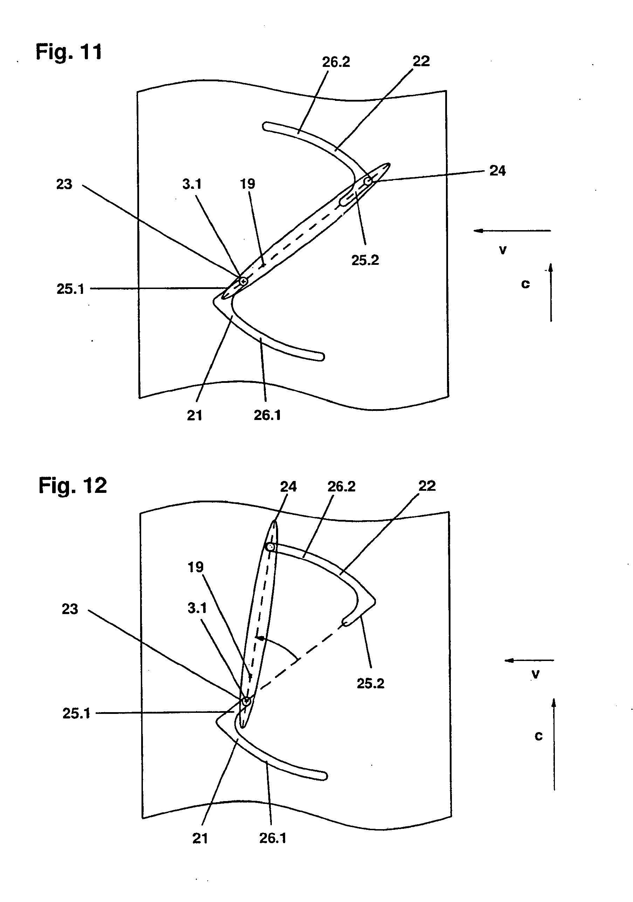

Die Funktion der Führungsnuten 21, 22 ist aus den Figuren 11 - 14 ersichtlich. Skizziert dargestellt ist die Projektion des bidirektional anströmbaren Profils 31 auf die Schnittdarstellung von Figur 9 für unterschiedliche Betriebssituationen. Figur 11 zeigt für eine antreibende Strömung c die Umlaufgeschwindigkeit v für den Normalbetrieb. Das erste Kopplungselement 23 ist im Endbereich der ersten tangentialen Führung 25.1 positioniert und das zweite Kopplungselement 24 befindet sich so in der zweiten Führungsnut 22, dass eine aufschwenkende Bewegung entlang des zweiten Aufschwenkbereichs 26.2 möglich ist. Als Folge wird durch das erste Kopplungselement 23 die erste Schwenkachse 3.1 festgelegt. Ferner werden die hydrodynamischen Kräfte durch die Wandung der ersten Führungsnut 21 aufgenommen. Zusätzlich wirkt die vorzugsweise flächige Ausbildung der oberen und unteren Abstützplatten 27, 28 lastaufnehmend. Ausgehend von diesem Normalbetriebszustand erfolgt im Überlastfall das Aufschwenken des Rotorblatts 1. Dies ist in Figur 12 dargestellt.

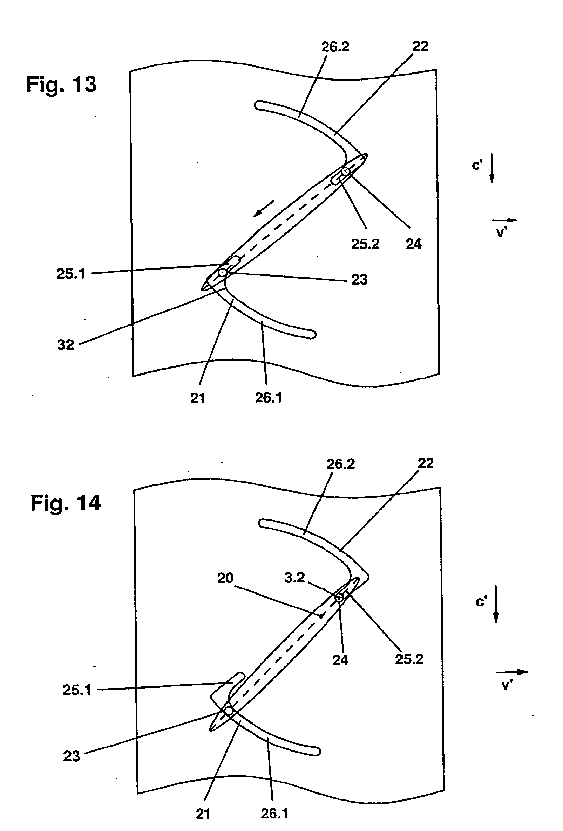

Bei einem Wechsel der Richtung der antreibenden Strömung c' erfolgt der in den Figuren 13 und 14 dargestellte Wechsel von der ersten Schwenkachse 3.1 auf die zweite Schwenkachse 3.2. Dabei führen der Strömungsdruck auf das Rotorblatt 1 und die sich aufbauende Tangentialkraft Fₜ zu einer Gleitbewegung der Kopplungselemente 23, 24 in den tangentialen Führungen 25.1, 25.2. Im weiteren Verlauf dieser Bewegung folgt das erste Kopplungselement 23 der gekrümmten Gleitbahn 32 auf der Innenseite der ersten Führungsnut 21 und das zweite Kopplungselement 24 wird bis zum Endbereich der zweiten tangentialen Führung 25.2 bewegt. Als Resultat wird die zweite Schwenkachse 3.2 durch das zweite Kopplungselement 24 festgelegt. Durch eine nachfolgende Zunahme der Umlaufgeschwindigkeit v erfolgt wiederum ein Momentengleichgewicht, das zu einer parallelen Ausrichtung der Profilsehne 9 relativ zur Achse der tangentialen Führungen 33 führt. Diese zu Figur 9 spiegelbildliche Stellung ist im Einzelnen nicht in den Figuren dargestellt.

Weitere Ausgestaltungen der Erfindung sind denkbar. Dabei ist es insbesondere möglich, dass die Schwenkachse 3 einen gekrümmten Verlauf einnimmt, insbesondere im Falle sichelförmiger Rotorblätter. Entsprechendes gilt für den Fall einer Schwenkachse 3 bei einer Verdrillung des Rotorblatts aufgrund der hydrodynamischen Kräfte, wenn die aussteifenden Komponenten, die die Schwenkachse 3 festlegen, nicht geradlinig verlaufen. Eine nicht geradlinig verlaufende Schwenkachse stellt demnach eine mögliche Ausführungsform der Erfindung dar. Ferner kann ein erfindungsgemäß gestaltetes Unterwasserkraftwerk insbesondere im Bereich der Rotorblattverstelleinrichtung ein Bewuchsschutzsystem aufweisen. Ein solches kann Einrichtungen zum Aufheizen von Anlagenteilen umfassen, um einen Bewuchs abzulösen und insbesondere die Führungsbahnen und Ablaufelemente der Rotorblattverstellung in einem funktionsfähigen Zustand zu halten. Weitere Ausgestaltungen der Erfindung ergeben sich aus dem Umfang der nachfolgenden Schutzansprüche.

### Bezugszeichenliste

- 1: Rotorblatt
- 2: umlaufende Einheit
- 3: Schwenkachse
- 3.1: erste Schwenkachse
- 3.2: zweite Schwenkachse
- 4: Aussteifung
- 5: Achsstutzen
- 6: Aufnahme
- 7: Lagerung
- 8: Radialsicherung
- 9: Profilsehne
- 10: Profilnase
- 11: hydrodynamisches Zentrum
- 11.1: Auffädellinie der hydrodynamischen Zentren
- 12: aufgeschwenkte Stellung
- 13: Torsionsachse
- 14: Zusatzgewicht
- 15: Rückstellkraft erzeugende Einrichtung
- 16: bidirektional anströmbares Profil
- 17: erste Profilnase
- 18: zweite Profilnase
- 19: erstes hydrodynamisches Zentrum
- 20: zweites hydrodynamisches Zentrum
- 21: erste Führungsnut
- 22: zweite Führungsnut
- 23: erstes Kopplungselement
- 24: zweites Kopplungselement
- 25.1: erste tangentiale Führung
- 25.2: zweite tangentiale Führung
- 26.1: erster Aufschwenkbereich
- 26.2: zweiter Aufschwenkbereich
- 27: obere Abstützplatte
- 28: untere Abstützplatte
- 29: ebener Führungsbereich
- 30: Gleitvorrichtung
- 31: Projektion des bidirektional anströmbaren Profils
- 32: gekrümmte Gleitbahn
- 33: Längsachse der tangentialen Führungen
- 34: Mittenlinie
- 39: Rotationsebene
- 40: Profil

- c, c': antreibende Strömung
- d: Anstellwinkel
- u, u': negative Umfangsgeschwindigkeit
- v, v': Umlaufgeschwindigkeit
- w, w': effektive Anströmung
- Fₐ,: Fₐ' Auftriebskraft
- F_{d}, F_{d}': Strömungswiderstand
- Fᵣ, Fᵣ': resultierende hydrodynamische Kraft
- F_{q},: F_{q}' Querkraft
- Fₜ, Fₜ': Tangentialkraft

## Patentansprüche

1. Unterwasserkraftwerk umfassend die folgenden Merkmale:
1.1 eine propellerförmige Wasserturbine in Horizontalläuferbauweise mit einer Vielzahl von Rotorblättern (1), die an einer umlaufenden Einheit (2) befestigt sind;
1.2 jedem Rotorblatt (1) eine Schwenkachse (3. 3.1, 3.2) zugeordnet ist, die sich im Wesentlichen längs des jeweiligen Rotorblatts (1) erstreckt, wobei die Rotorblätter (1) wenigstens in Teilen der Längserstreckung bezüglich einer Torsion um die Schwenkachse (3. 3.1, 3.2) elastisch ausgebildet sind und/oder die Befestigung der Rotorblätter (1) an der umlaufenden Einheit eine Drehung der Rotorblätter (1) um die Schwenkachse (3. 3.1, 3.2) ermöglicht;
1.3 die Lage der Schwenkachse (3. 3.1, 3.2) so relativ zur Profilkontur der Rotorblätter (1) gewählt ist, dass die beim Betrieb auf das Rotorblatt (1) wirkenden hydrodynamischen Kräfte ein Moment erzeugen, das in Richtung der Fahnenstellung gerichtet ist und die beim Umlauf entstehenden Fliehkräfte auf das Rotorblatt (1) rückstellende Zentrifugalmomente entgegen der Fahnenstellung bewirken, wobei sich ein Momentengleichgewicht zwischen den Zentrifugalmomenten und den hydrodynamischen Momenten einstellt;
**gekennzeichnet durch** die folgenden Merkmale:
1.4 die auf das Rotorblatt (1) wirkenden hydrodynamischen Kräfte bewirken bei einem Wechsel der Anströmungsrichtung einen Wechsel von einer ersten Schwenkachse (3.1) zu einer zweiten Schwenkachse (3.2), wobei die Schwenkachsen (3.1, 3.2) jeweils stromaufwärts zu dem für eine vorgegebene antreibende Strömung (c, c') wirkenden hydrodynamischen Zentrum (11, 20) angeordnet sind;
1.5 die hydrodynamischen Kräfte bewegen im Fall einer wechselnden Anströmung ein erstes Kopplungselement (23) in einer ersten Führungsnut (21) und ein zweites Kopplungselement (24) in einer zweiten Führungsnut (22).

2. Unterwasserkraftwerk nach Anspruch 1, **dadurch gekennzeichnet, dass** das Rotorblatt (1) für eine Torsion eine im Verlauf der Schwenkachse (3. 3.1, 3.2) variierende Elastizität aufweist.

3. Unterwasserkraftwerk nach Anspruch 2, **dadurch gekennzeichnet, dass** das Rotorblatt (1) von der umlaufenden Einheit aus gesehen im ersten Drittel der Längserstreckung eine größere elastische Rückstellkraft gegen eine Torsion um die Schwenkachse (3. 3.1, 3.2) erzeugt als im übrigen Bereich seiner Längserstreckung.

4. Unterwasserkraftwerk nach einem der vorausgehenden Ansprüche, **dadurch gekennzeichnet, dass** die Rotorblätter (1) ein bidirektional anströmbares Profil aufweisen.

5. Unterwasserkraftwerk nach Anspruch 4, **dadurch gekennzeichnet, dass** für einen Wechsel von der ersten Schwenkachse (3.1) zur zweiten Schwenkachse (3.2) das erste Kopplungselement (23) aus einer ersten tangentialen Führung (25.1) in der ersten Führungsnut (21) herausbewegt wird und das zweite Kopplungselement (24) in eine zweite tangentiale Führung (25.2) in der zweiten Führungnut (22) hineinbewegt wird.

6. Verfahren zum Betrieb eines Unterwasserkraftwerks nach einem der Ansprüche 1 bis 5, **dadurch gekennzeichnet, dass** der Blattwinkel des Rotorblatts 1 relativ zur Rotationsebene (39) durch das Momentengleichgewicht aus Zentrifugalmomenten und hydrodynamischen Momenten eingestellt wird.

## Claims

1. An underwater power station comprising the following features:
1.1 a water propeller-shaped turbine with a horizontal runner with a plurality of rotor blades (1), which are fixed to a rotating unit (2);
1.2 a swivel axis (3, 3.1, 3.2) is associated with each rotor blade (1), which extends more or less along the respective rotor blade (1), whereas the rotor blades (1) are arranged elastically around the swivel axis (3, 3.1, 3.2) at least in certain portions of the longitudinal extension in terms of torsion and/or the fastening of the rotor blades (1) at the rotating unit enables a rotation of the rotor blades (1) around the swivel axis (3, 3.1, 3.2);
1.3 the situation of the swivel axis (3, 3.1, 3.2) is selected with respect to the profile outline of the rotor blades (1) in such a way that the hydrodynamic forces acting upon the rotor blade (1) during operation generate a moment, which is arranged in the direction of the wind and the centrifugal forces resulting during rotation, act upon the centrifugal moment resetting the rotor blade (1) opposite to the direction of the wind whereas a balance of moments adjusts itself between the centrifugal moments and the hydrodynamic moments;
**characterised by** the following features:
1.4 the hydrodynamic forces acting on the rotor blade (1) enable, when changing the inflow direction, to switch from a first swivel axis (3.1) to a second swivel axis (3.2), whereas the swivel axes (3.1, 3.2) are arranged respectively upstream to the hydrodynamic centre (11, 20) acting to produce a prescribed driving flow (c, c');
1.5 the hydrodynamic forces move with an alternating flow a first coupling element (23) situated in a first guiding groove (21) and a second coupling element (24) situated in a second guiding groove (22).

2. An underwater power station according to claim 1, **characterised in that** the rotor blade (1) exhibits an elasticity varying over the swivel axis (3, 3.1, 3.2) to generate a torsion.

3. Underwater power station according to claim 2, **characterised in that** see from the rotating unit the rotor blade (1) generates in the first third of the longitudinal extension to oppose a torsion around the swivel axis (3, 3.1, 3.2) a greater elastic resetting force than in the rest of its longitudinal extension.

4. Underwater power plant according to one of the previous claims, **characterised in that** the rotor blades (1) have a profile with air flowing from both sides.

5. Underwater power station according to claim 4, **characterised in that** the first coupling element (23) is moved out from a first tangential guide (25.1) in the first guiding groove (21) to switch from the first swivel axis (3.1) to the second swivel axis (3.2) and the second coupling element (24) is moved in into a second tangential guide (25.2) in the second guiding groove (22).

6. Method for operating an underwater power station according to any of the claims 1 to 5, **characterised in that** the blade angle of the rotor blade 1 is adjusted with respect to the rotation plane (39) by the balance of moments with respect to the centrifugal moments and the hydrodynamic moments.

## Revendications

1. Centrale immergée comprenant les caractéristiques suivantes:
1.1 une turbine à eau en forme de propulseur avec une glissière horizontale avec une pluralité de lames de rotor (1), qui sont fixées à une unité rotative (2);
1.2 un axe de pivotement (3, 3.1, 3.2) est associé à chaque lame de rotor (1), s'étendant plus ou moins le long de la lame de rotor (1) respective, où les lames de rotor (1) sont constituées élastiquement, au moins dans des portions de l'étendue longitudinale, en torsion autour de l'axe de pivotement (3, 3.1, 3.2) et/ou la fixation des lames de rotor (1) permet une rotation des lames de rotor (1) par rapport à l'axe de pivotement (3. 3.1, 3.2) au niveau de l'unité rotative;
1.3 la position de l'axe de pivotement (3. 3.1, 3.2) est sélectionnée par rapport au contour de profil des lames de rotor (1) de tellr sorte que les forces hydrodynamiques agissant sur la lame de rotor (1) génèrent un couple qui est dirigé dans le sens du vent et les forces centrifuges générées pendant la rotation produisent des couples centrifuges de remise à zéro sur la lame de rotor (1) et opposées au sens du vent, tandis que les couples s'équilibrent entre les couples centrifuges et les couples hydrodynamiques;
présentant les caractéristiques suivantes:
1.4 les forces hydrodynamiques agissant sur la lame de rotor (1) produisent, en cas de changement du sens d'écoulement, le passage d'un premier axe de pivotement (3.1) vers un second axe de pivotement (3.2), où les axes de pivotement (3.1, 3.2) sont disposés respectivement en amont par rapport au centre hydrodynamique (11, 20) agissant pour produire un écoulement d'entraînement prescrit (c, c');
1.5 les forces hydrodynamiques déplacent dans le cas d'un écoulement alternatif un premier élément d'accouplement (23) dans une première gorge de guidage (21) et un second élément d'accouplement (24) dans une seconde gorge de guidage (22).

2. Centrale immergée selon la revendication 1, **caractérisée en ce que** la lame de rotor (1) présente une élasticité variable sur l'axe de pivotement (3, 3.1, 3.2) pour produire une torsion.

3. Centrale immergée selon la revendication 2, **caractérisée en ce que** la lame de rotor (1), vue de l'unité rotative, présente dans le premier tiers de l'étendue longitudinale une force de rappel élastique plus importante, par rapport à une torsion exercée autour de l'axe de pivotement (3, 3.1, 3.2), que dans le reste de son étendue longitudinale.

4. Centrale immergée selon l'une quelconque des revendications précédentes, **caractérisée en ce que** les lames de rotor (1) présentent une profil exposé à un écoulement bidirectionnel.

5. Centrale immergée selon la revendication 4, **caractérisée en ce que** le premier élément d'accouplement (23) est déployé à partir d'un premier guide tangentiel (25.1) dans la première gorge de guidage (21) en cas de passage du premier axe de pivotement (3.1) vers le second axe de pivotement (3.2) et le second élément d'accouplement (24) est rentré dans un second guide tangentiel (25.2) disposé dans la seconde gorge de guidage (22).

6. Procédé d'exploitation d'une centrale immergée selon l'une des revendications 1 à 5, **caractérisé en ce que** l'angle de calage de la lame de rotor 1 par rapport au plan de rotation (39) est réglé par l'équilibrage des couples entre les couples centrifuges et les couples hydrodynamiques.
